(19) Europäisches Patentamt / European Patent Office / Office européen des brevets

(11) **EP 3 171 297 A1**

(12) **EUROPEAN PATENT APPLICATION**

(43) Date of publication:
**24.05.2017 Bulletin 2017/21**

(51) Int Cl.:
**G06K 9/46** (2006.01)  **G06K 9/48** (2006.01)
**G06K 9/62** (2006.01)

(21) Application number: **15306836.6**

(22) Date of filing: **18.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **CentraleSupélec**
**91190 - Gif sur Yvette (FR)**

(72) Inventors:
• **KOKKINOS, Iasonas**
**75014 PARIS (FR)**
• **PARAGIOS, Nikos**
**75004 PARIS (FR)**

(74) Representative: **Lavoix**
**2, place d'Estienne d'Orves**
**75441 Paris Cedex 09 (FR)**

(54) **JOINT BOUNDARY DETECTION IMAGE SEGMENTATION AND OBJECT RECOGNITION USING DEEP LEARNING**

(57) The present invention concerns methods and devices for image processing to achieve boundary detection, image segmentation into regions, image labeling into object classes ('semantic segmentation') and detection of the positions of objects in images using deep convolutional neural networks

FIG.3

**Description**

The present invention concerns methods and devices for image processing to achieve boundary detection, image segmentation into regions, image labeling into object classes ('semantic segmentation') and detection of the positions of objects in images using deep convolutional neural networks.

Deep Convolutional Neural Networks (DCNNs) had been the method of choice for document recognition since the article "Gradient-based learning applied to document recognition", in Proceedings of the IEEE, 1998, but have only recently become the mainstream of high-level vision research. Starting from the breakthrough work published by Krizhevsky et al., in the article "Imagenet classification with deep convolutional neural networks" in NIPS 2013, over the past three years DCNNs have delivered compelling results in high-level vision tasks, such as image classification or object detection

Recent works have also shown that DCNNs can equally well apply to pixel-level labelling tasks, with one of the most exciting recent developments being the use of Fully-Convolutional Neural Networks (FCNN); this has substantially simplified the solution of image labelling tasks, while giving clear improvements over the previous state-of-the-art in semantic segmentation or normal estimation.

We propose a system that can jointly address four tasks in a single architecture: we address (i) the low-level task of boundary detection, (ii) the mid-level task of generating region proposals that can contain objects, (iii) the high-level task of semantic segmentation, namely labeling every image pixel as belonging to one out of a predetermined set of object classes (airplanes, bicycles,..), and (iv) object detection, namely providing the positions of objects in images.

According to an aspect, the invention proposes a boundary detection method according to claim 1 that surpasses the performance of humans on this task. Boundary detection serves as a pillar for practically all subsequent high-level tasks.

It is an achievement of this invention to surpass the performance of humans on this task by employing a multi-resolution DCNN architecture, trained in a manner that accommodates the challenges of the boundary detection task. Our evaluation for this task has relied on the Berkeley Segmentation Dataset (BSD), described in "Contour detection and hierarchical image segmentation" by Arbelaez et al., PAMI 2011.

Advantageously, the method proposed firstly improves the deep learning algorithms used for boundary detection by introducing novel machine learning techniques, secondly incorporates classical ideas from grouping into the problem and thirdly uses synergies with the tasks of semantic segmentation and object detection.

According to another aspect, the invention concerns a method for processing a digital image, the method being adapted to jointly achieve several tasks including boundary detection, region generation, class-specific image labeling and object detection according to claim 9.

We design a Deep Convolutional Neural Network (DCNN) architecture that jointly tackles the low-level problems of boundary detection, the midlevel task of segmentation (region proposals) and the high-level tasks of semantic segmentation and object recognition.

Unlike most recent multi-task architectures, in our work the flow of information across these different tasks is explicitly controlled and exploited through a recurrent architecture. For this we introduce a reference layer that conglomerates at every stage the results of the different tasks and then updates the solutions to the individual tasks in the light of the previous solutions. This recurrent architecture allows the synergy between the tasks to be exploited and leads to increasingly accurate solutions. Our evaluation on this task uses the PASCAL Visual Object Classes (VOC) benchmark, described in "The PASCAL Visual Object Classes Challenge - a Retrospective", by Everingham et al.

Advantageously, the proposed method and system operates in 1 second per frame on a GPU ("Graphics Processing Unit") and delivers state-of-the-art results in all tasks.

The invention will be better understood in the light of the detailed description and accompanying drawings listed below, which are only exemplary and by no way limiting:

- Figure 1 schematically illustrates a HED/DSN training architecture;
- Figure 2 schematically illustrates a network architecture used for multi-resolution HED training;
- Figure 3 schematically illustrates an embodiment of multi-resolution and multi-task architecture;
- Figure 4 schematically illustrates a recurrent architecture for multi-task processing;
- Figure 5 is a block diagram of an exemplary computer system adapted to implements methods according to the invention.

Various embodiments of the methods and systems of the inventions will be described in detail hereafter.

IMPROVED DEEP BOUNDARY DETECTION TRAINING

Boundary detection can be considered to be an ill-posed problem, in the sense that multiple solutions can be considered plausible, depending on the task at hand. This is reflected also in large-scale inconsistencies in the segmentation of a single scene by multiple annotators. As detailed in the article "Contour detection and hierarchical image segmentation" by Arbelaez et al., PAMI 2011, we can 'benchmark' humans against each other: for an image with multiple annotators we compare the annotation of every user with respect to the remaining annotations (considered as the ground truth), and average over users and images. When evaluated on the test set of Berkeley Segmentation Dataset (BSD) humans have an F-measure of 0.803, which is indicative of the difficulty of the task.

Starting from the introduction of human annotated datasets for boundary detection dramatic progress was witnessed dramatic progress, when compared to engineered models used in the previous decades. Following these works, consistent improvements in performance on these benchmarks have been achieved, relying primarily on the design of new features and the application of appropriate machine learning techniques to the problem.

The advent of deep learning influenced research in boundary detection and recent works have shown that DCNNs yield substantial improvements over engineered classifiers.

The Holistic Edge Detection (HED) approach described in "Holistically-nested edge detection", by Xie and Tu, published in the Proceedings of ICCV, 2015 (hereafter referenced "Xie & Tu, 2015") has been shown to dramatically improve over the previous state-of-the-art, from an F-measure of 0.75 to 0.78, and with dataset augmentation to 0.79, while keeping computation efficient, requiring 0.4 seconds on the GPU.

According to an aspect of the invention, we introduce a training objective that explicitly encodes the uncertainty of human boundary annotations in a Multiple Instance Learning framework (MIL) and incorporate it as a loss for the training of a HED-style DCNN for boundary detection.

A variant of Deep Supervised Network (DSN) is proposed, that has an annealing-like behaviour: while DSN uses a loss function to guide the learning of all intermediate layers we propose to use DSN that starts by guiding all layers for the task at hand, but eventually abandons the earlier ones, leaving to the top layer the task of coordinating the earlier layers at the end.

We also introduce a multi-resolution architecture for boundary detection that ties the weights of different scales, and learns to fuse the multi-scale boundary probability estimates at the end, and finally we show that dataset augmentation using the PASCAL VOC ("Visual Object Classes") context dataset yields a substantial improvement of performance.

Each of those features is shown to yield an improvement on its own; when combined they increase the performance, measured with F-measure with respect to the ground truth, of our system from 0.78 to 0.808, which is already above human-level performance.

Furthermore, we use spectral clustering (Normalized Cuts, or NCuts), efficiently implemented on the GPU in order to 'globalize' the locally computed evidence for the presence of boundaries in terms of spectral boundaries. Fusing these with the discriminatively estimated class scores through an additional processing layer yields a substantial boost of the F-measure.

We start from a brief presentation of the 'Holistic Edge Detection' (HED) as it serves as a starting point for our work. We then present our novel contributions on (i) Multiple Instance Learning for boundary detection, (ii) Temporally-tempered Deep Supervision (iii) Multi-Scale training.

PRIOR WORK: HED AND DSN TRAINING

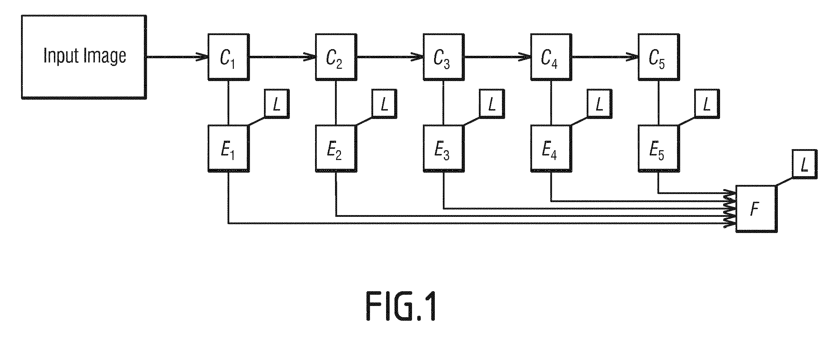

The authors of HED use 'Deep Supervised Network' (DSN), proposed by Lee et al., in the article "Deeply-supervised nets' published in AISTATS 2015, training to finetune the network of the Visual Geometry Group (VGG network) introduced in "Very Deep Convolutonal Networks for Large-Scale Image Recognition", by K. Simonyan, and A. Zisserman, Proceedings of the International Conference on Learning Representations (ICLR) 2015 for the task of boundary detection, illustrated in Fig. 1.

Figure 1 schematically shows an input image, processed by intermediate layers Ci, each intermediate layer being processed by a side layer Ei penalized by a loss function, also called objective function $L_i$. The intermediate results are combined in a late fusion stage, which is again trained with the same loss function.

The principle behind DSN can be understood as classifier stacking adapted to deep learning and turns out to be practically very successful: if a multi-layer architecture is optimized for a given task, one can anticipate better results by informing each layer about the final objective, rather than relying on the final layer to back-propagate the information to its predecessors. This was shown to systematically improve convergence and test performance, both in generic detection tasks and in particular in the context of boundary detection.

In particular, using the notation of (Xie and Tu, 2015), we have a training set S = $(X_n; Y_n)$; n =1,...., N with $X_n$ being the input image and $Y_n = \left\{ y_j^{(n)}, j = 1,....,\left|X_n\right| \right\}, y_j^{(n)} \in \left\{0,1\right\}$ being the predicted labels. In the following, the subscript n will be dropped for brevity.

We consider a multi-layer network, represented in terms of the union of its individual layer parameters, W, to which we append a set of per-layer 'side' parameters $w^{(1)},....,w^{(M)}$. These side parameters aim at steering the intermediate layers of the network to extract features that are useful for the classification task even when used on their own. This is reminiscent to classifier stacking, but the difference is that the intermediate layers of the network are not performing classification - but are rather forced to be useful for the side classifier appended to them. This is shown to both improve convergence and test performance.

The objective function of DSN/HED is phrased as:

$$L_{side}(W,w) = \sum_{m=1}^{M} \alpha_m l^m(W, w^{(m)}) \quad \text{(Eq. 1)}$$

With $l^m$ being the side-layer losses on the side output of the m-th layer and $\alpha_m$ coefficients indicating the relative importance of the different layer losses - a trivial case is when $\alpha_m = 0$, $m < M$, which amounts to standard training with a single loss at the top. In HED, $l^m$ is a class-balanced cross-entropy loss:

$$l^m(W, w^{(m)}) = -\beta \sum_{j \in Y+} \log P(y_j = 1 | X; W; w^{(m)}) - (1 - \beta) \sum_{j \in Y-} \log P(y_j = 0 | X; W; w^{(m)}) \quad \text{(Eq. 2)}$$

$$l^m(W, w^{(m)}) = \sum_{j \in Y} \omega_{\hat{y}_j} S(\hat{y}_j, s_j^m) \quad \text{(Eq. 3)}$$

Where, in (Eq. 2), Y+, Y- are the positive and negative training sample indices respectively, and $\beta$ is a design parameter set to mitigate the substantially larger number of negative samples in images. The probabilities in (Eq. 2) are obtained in terms of a sigmoidal function operating on the inner product $s_j^m = \left\langle w^{(m)}, f_j \right\rangle$ between the side layer parameters $w^{(m)}$ and the features $f_j$ of the DCNN at position j, $P(y_j = 1 | X; W, w^{(m)}) = \sigma(s_j^m)$.

In (Eq. 3) we rewrite (Eq. 2) in a more general form where we sum over the whole image domain and use the ground truth label $\hat{y}_j$ to indicate which weight and which of the two loss terms is used per pixel j.

An additional processing step of HED is a late fusion stage where the side outputs are combined into a final classification score. This is very meaningful for the task of boundary detection, as it exploits the multi-scale information extracted by the different processing layers of the DCNN. In particular, denoting by $S^m$ the field of values predicted by the m-th side-layer, these are linearly combined into a final score, $S^{fs} = \sum_{m=1}^{M} h_m S^m$ ; a fusion loss is used to learn the weights h by calibrating the relative importance of the different side-layers when forming the final prediction:

$$L_{fuse}(W, w, h) = \sum_{j \in Y} \omega_{\hat{y}_j} S\left( \hat{y}_j, \sum_{m=1}^{M} h_m s_j^m \right) \quad \text{(Eq. 4)}$$

The overall objective function of HED is written as follows:

$$L_{HED}(W, w, h) = L_{side}(W, w) + L_{fuse}(W, w, h) \quad \text{(Eq. 5)}$$

and is optimized using common Stochastic Gradient Descent training with momentum ( refer to Xie & Tu, 2015 for details).

DEALING WITH ANNOTATION INCONSISTENCIES

Having briefly presented the HED framework, we now turn to our contributions, the first of which aims at dealing with the inconsistency of human annotations in the BSD.

It was noticed that, even if the two annotators agree about the semantics , they do not place the boundaries at a common location. This inconsistency makes it challenging to define 'positive' and 'negative' training samples in the vincinity of boundaries. Actually two different users may provide conflicting information, leading the training algorithm astray.

This problem has already been acknowledged in the literature, and can be understood as being implicitly addressed by voting-like mechanisms, that average different interpretations in a forest-type classifier.

It was proposed in the article "Multiscale centerline detection" by Sironi et al., published in PAMI 2015 to turn boundary detection into a regression problem, by explicitly manipulating the ground truth to become smoother - which however may come at the cost of localization accuracy. In (Xie & Tu, 2015) a heuristic that was used was to only consider a pixel as positive if it is annotated consistently by more than three annotators. It is however unclear why other pixels should be labelled as negatives.

The approach proposed here is to use Multiple Instance Learning (MIL), proposed by Dietterich et al in the article "Solving the multiple-instance problem with axis-parallel rectangles", published in Artificial Intelligence, 89, pages 31-71, 1997, in order to deal with positional ambiguity in the annotations while learning a position-sensitive detector.

Standard, 'single instance' learning assumes training samples come in feature-label pairs -or, as in HED above, every pixel is either a boundary or not. Instead, MIL takes as a training sample a set of features ('bag') and its label. A bag should be labelled positive if at least one of its features is classified as positive, and negative otherwise.

In particular, since human annotations come with some positional uncertainty, the standard evaluation protocol allows for some slack in the predicted position of a pixel (a fixed fraction of the image diagonal). One therefore does not need to label every positive pixel as a positive, but rather give a large score to a pixel in its vicinity - and to be more precise, a set of pixels in the line perpendicular to its orientation. This set of pixels forms the bag associated to every positive pixel annotation. A pixel is declared negative if it is not contained in any positive bag.

More specifically, we associate every ground-truth boundary position j with a set of $N_j$ positions and an associated feature bag, $\chi_j = \{X_{j,1},...,X_{j,Nj}\}$. These positions are estimated by identifying the image positions that lie closer to i than any other ground-truth pixel and have a distance below a threshold d.

For each feature $X_{j,k}$ of the j-th bag our classifier provides a probability $p_{j,k}$ of it being positive, exactly as described in (Eq. 2) but now the final decision is taken by maximizing over the individual instance probabilities:

$$p_{\chi_j} = P\left(y_i = 1 \middle| \chi_j\right) = \max_{k \in [1,...,N_j]} p_{j,k} \quad \text{(Eq. 6)}$$

The cost function now writes:

$$l^m\left(W, w^{(m)}\right) = \sum_{j \in Y-} \omega_{\hat{y}_j} S\left(-1, s_j^m\right) + \sum_{j \in Y+} \omega_{\hat{y}_j} S\left(1, \max_{j \in B_i} s_j^m\right) \quad \text{(Eq. 7)}$$

where $B_i$ is the 'bag' of pixel indices associated with sample i; in words this allows positive samples to select the neighbours that most support them while forcing all negatives to be negative.

In terms of optimization, even though the max operation in (Eq. 6) is not differentiable, we can use a subdifferential of $p_j$:

$$\partial p_j = \frac{dp_{j,k*}}{df\left(X_{j,k*}\right)} \text{ where } k* = \arg\max_k(p_{j,k}) \quad \text{(Eq. 8)}$$

We summarize our experimental findings regarding this contribution in Table 1. In this, and all of the subsequent tables, we report the F-measure obtained for the 'Optimal Dataset Scale' (ODS) and 'Optimal Image Scale' (OIS) on the BSD test set.

TABLE 1

| d | ODS | OIS |
|---|-----|-----|
| 0 | 0.7781 | 0.7961 |
| 1 | 0.7863 | 0.8083 |
| 2 | 0.7865 | 0.8091 |

GRADUATED DSN TRAINING

The two terms in the objective function of HED, (Eq. 5):

$$L_{HED}(W, w, h) = L_{side}(W, w) + L_{fuse}(W, w, h) \quad \text{(Eq. 5)}$$

play a complementary role: the first side-layer terms force the intermediate layers to be discriminative (as in the original DSN framework (Lee et al., 2015)) and also extract some preliminary classification information; the second fusion-layer term calibrates the importance of the intermediate classifications delivered by the side-layers.

Our observation is that once the intermediate features have become discriminative only the second term is really needed - as the final decision is based on the fused classifier score, rather than the intermediate ones. Once we have reached that stage it may actually be better to discard the side-layer losses while retaining the side-layer processing; this makes it possible for the fusion-layer to use the side-layers at will, without the compromises needed to keep the side losses low.

Based on this observation we propose an innocuous modification to the loss objective that we empirically observed to yield improved results at test time: we associate the first term with a temporally decreasing cost while keeping the second term's cost fixed:

$$L^{(t)}(W, w, h) = \left(1 - \frac{t}{T}\right)L_{side}(W, w) + L_{fuse}(W, w, h)$$

where t is the current training epoch and T is the total number of epochs. Our training criterion starts from DSN where every intermediate layer is trained for classification and eventually leads to a skip-layer architecture, where the early layers are handled exclusively by the final fusion criterion.

Table 2 shows the impact of gradually removing the side-losses in DSN training : Graduated DSN outperforms DSN, by allowing the side layers in the final stages of training to be fully controlled by the final fusion scheme.

TABLE 2

| DSN vs G-DSN | ODS | OIS |
|---|---|---|
| DSN | 0.7865 | 0.8091 |
| G-DSN | 0.7892 | 0.8106 |

MULTI-RESOLUTION ARCHITECTURE

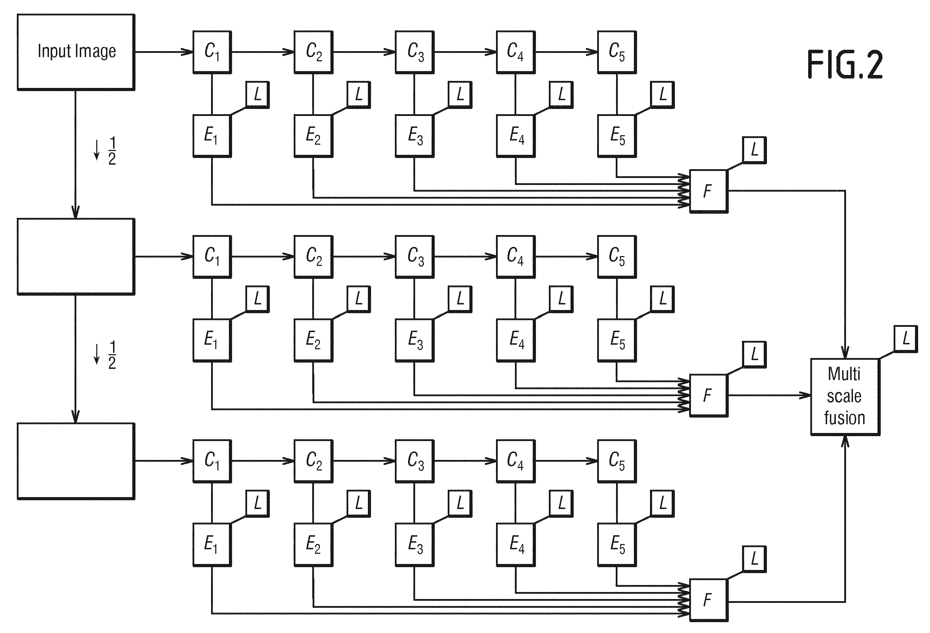

An example of VGG network trained for the task of boundary detection is illustrated in Fig. 2.

Figure 2 shows a network architecture used for multi-resolution HED training, for 3 scaled versions of the input image, which are provided as inputs to three DCNN networks that share the same weights. Their multi-resolution outputs are fused in a late fusion stage, extending DSN to multi-resolution training.

We propose to enhance HED by applying multi-resolution boundary detection.

We first observed that simply averaging the results of the network applied to differently scaled versions of the image improved performance substantially. We then turned to a more accurate way of doing the multi-resolution detection: we consider a DSN-type multi-resolution architecture with tied weights, meaning that layers that operate at different resolutions share weights with each other. Parameter sharing across layers both accelerates convergence and also avoids over-fitting. We initialize the weights from a single-resolution architecture and finetune with a smaller set of iterations.

We observed that we get better results if the top-resolution image is an upsampled version of the original - e.g. for a 381 x 421 image from the BSD dataset we use a 577 x 865 upsampled version, from which we compute a three-level pyramid by downsampling by a factor of 2 and 4.

The multi-resolution results are fused through an additional fusion layer that combines the fused results of the individual resolutions. Also for the multi-resolution fusion we observed that Graduated DSN yields better results than plain DSN.

Table 3 shows the impact of using multiple resolutions: while parameter sharing ensures that the two architectures have the the same number of parameters, the use of multiple scales improves detection performance.

TABLE 3

| Number of scales | ODS | OIS |
|---|---|---|
| Single | 0.7892 | 0.8106 |
| Three-layers | 0.8033 | 0.8196 |

TRAINING WITH EXTERNAL DATA

Even though HED uses the pretrained VGG network as initialization, dataset augmentation was reported to give substantial improvements. The authors in (Xie & Tu, 2015) originally used 20 geometric transformations (rotations and flippings) of the 300 images used in the BSD trainval set, resulting in a total of roughly 10000 training images - while in a recent extension multiple scales are considered, resulting in roughly 30000 training images, and yielding another boost in performance (from 0.78 to 0.79).

We have considered in our evaluations the use of boundaries from the PASCAL VOC Context dataset (Mottaghi et al., 2014), where all objects and 'stuff' present in the scene are manually segmented. Our sole modification to those boundaries has been to label the interiors of houses as 'don't care' regions that are ignored by the loss, since all of the windows, doors, or balconies that are missed by the annotators seemed to us as being legitimate boundaries. We only apply flipping to these images, resulting in roughly 20000 images, which are appended to the 20000 images used by (Xie & Tu, 2015).

Table 4 shows the impact of training with external data: we augment the dataset-augmented BSD trainval dataset with 20000 images from the VOC-context dataset; this helps further boost the detection accuracy of the multi-resolution network

TABLE 4

| Dataset | ODS | OIS |
|---|---|---|
| BSD-Aug | 0.8033 | 0.8196 |
| BSD-Aug + VOC | 0.8086 | 0.8268 |

USING GROUPING IN A DEEP ARCHITECTURE

The combination of the techniques outlined above already help boundary detection outperform humans on the task of boundary detection - but still do not use any grouping information when delivering the probability of having boundaries. The boundary detector only implicitly exploits grouping cues such as closedness or continuity. It is also troublesome to turn the locally computed boundaries into a representation that can be used 'densely' for region-oriented tasks such as semantic segmentation.

Even though grouping has a vast history, one of the most appealing algorithms for performing these tasks is the Normalized Cuts (NCuts) technique described in the article "Normalized cuts and image segmentation" by Shi and Malik, published in the proceedings of CVPR in 1997.

In NCuts we treat the image as a weighted graph, where nodes corresponding to pixels and weights correspond to the low-level affinity between pixels, measured in terms of the Intervening Contour cue (Shi & Malik, 1997). The NCut technique considers a relaxation of the discrete normalized cut optimization problem, which results in a generalized eigenvector problem :

$$(D - W)v = \lambda Dv \ \text{(Eq. 10)}$$

where D is the graph degree matrix and W is the affinity. The solutions to this generalized eigenvector problem can be understood as euclidean embeddings of the inter-node distances - so nodes that have similar embeddings are likely to belong together and vice versa.

One of the main impediments to the application of this technique has been computation time, requiring roughly 60 seconds on the CPU for a 321 x 481 image for 10 eigenvectors.

We propose to harness the computational power of GPUs and integrate the Damascene system of Catanzaro et al., "Efficient, high-quality image contour detection", Proceedings ICCV, 2009 in a deep Convolutional Neural Network. When integrated with our boundary detector Damascene yields 8 eigenvectors for a 577 x 865 image in no more than 0.2 seconds. It is also straightforward to use a downsampled version of the boundary map to yield further accelerations, but we have avoided it for simplicity.

These embedding can be used for boundary detection in terms of their directional derivatives, in order to provide some 'global' evidence for the presence of a boundary, known as the 'spectral probability of boundary' cue (Arbelaez et al., 2011). This further improves the performance of our detector, yielding an F-measure of 0.813, which is substantially better than our earlier performance of 0.807, and humans, who operate at 0.803. Preferably a very simple fusion scheme (addition of the posterior with SpectralPB) is used. Alternatively, adding a few nonlinear processing layers further improves performance.

Table 5 shows the impact of combining the spectral probability of boundary (sPb) with the best DCNN trained so far: sPb further improves performance, while being computed in less than 0.2 seconds on the GPU.

TABLE 5

| Method | ODS | OIS |
| --- | --- | --- |
| DCNN | 0.8033 | 0.8196 |
| DCNN+sPb | 0.8134 | 0.8308 |

Table 6 shows the performance of the proposed method (DCNN+sPb) as compared with the latest version of HED ("HED-late merging"), including average precision (AP). The method proposed, using DCNN+SPb, has a better boundary detection than the human boundary detection and outperforms HED, while maintaining the computational speed above 1 frame per second.

TABLE 6

| Method | ODS | OIS | AP |
| --- | --- | --- | --- |
| HED-fusion | 0.790 | 0.808 | 0.811 |
| HED-late merging | 0.788 | 0.808 | 0.840 |
| DCNN+sPb | 0.8134 | 0.8308 | 0.866 |

The experiments have shown that starting from a baseline (that performs slightly worse than the HED system of (Xie & Tu, 2015) we have introduced a series of changes that resulted in super-human boundary detection performance. We denote that when compared to the current state-of-the-art method (Xie & Tu, 2015) our method clearly dominates in terms of all typical performance measures, as shown in Table 6.

COMBINATION WITH OBJECT PROPOSAL GENERATION

The generation of regions of interest has been established as a standard preprocessing step for object detection; one big push to the broad adoption of such methods has been the successful incorporation of "Selective Search for Object Recognition", proposed by Uijlings et al., in IJCV 2013, into the RCNN work of Girshick et al., described in "Rich feature hierarchies for accurate object detection and semantic segmentation", published in Proceedings of CVPR, 2014, making them the dominant paradigm for current object detection.

As such the generation of well-placed proposals is of paramount importance for the subsequent success of object detection - while several such proposal systems heavily rely on the use of contours.

In order to assess the merit of our boundary detector we have integrated it with the 'Learning to Propose Objects' (LPO) system of Krähenbühl and Koltun, published in the Proceedings of CVPR, 2015, that is currently leading the state-of-the-art in region proposal generation. The original LPO system uses the multi-scale Structured Forest (MSSF) boundary detection method proposed by Dollar and Zitnick in "Fast edge detection using structured forests" published in PAMI, 37-8), pages 1558-1570, 2015, which has an F-measure of 0.75; it is therefore interesting to see what is the impact of our detector in the overall performance of the LPO system.

We have retrained LPO using our boundaries instead and assessed its segmentation proposals on the test set used in the 2012 edition of the Pascal VOC dataset; a side-by-side comparison of results in similar region proposal regimes (identified in terms of the number of generated region proposals) indicates striking performance improvements.

As can be seen from table 7, the proposed method (New Method) systematically outperforms the LPO-MSSF method in terms of F-measure of the object proposal, for each performed test. In particular, Table 7 shows the performance of the proposed method (New Method) as compared to the "Learning to Propose Objects" method combined with the MSSF detector described above. That work constitutes the present state-of-the-art in the problem of region proposal generation.

The results shown in the table compare the number of region proposals, and the F-measure for the average best overlap (ABO) and recall at 50% and 70% overlap.

TABLE 7

| Method | Region Proposals | ABO | 50% | 70% |
| --- | --- | --- | --- | --- |
| LPO-MSSF | 6185 | 0.701 | 0.862 | 0.557 |
| New Method | 4965 | 0.809 | 0.942 | 0.782 |
| LPO-MSSF | 4121 | 0.687 | 0.847 | 0.515 |
| New Method | 2838 | 0.791 | 0.930 | 0.755 |
| LPO-MSSF | 2877 | 0.675 | 0.829 | 0.495 |
| New Method | 2311 | 0.785 | 0.918 | 0.737 |
| LPO-MSSF | 2114 | 0.660 | 0.803 | 0.460 |
| New Method | 1686 | 0.772 | 0.909 | 0.710 |
| LPO-MSSF | 1266 | 0.634 | 0.763 | 0.404 |
| New Method | 1072 | 0.752 | 0.883 | 0.669 |
| LPO-MSSF | 906 | 0.612 | 0.715 | 0.352 |
| New Method | 794 | 0.735 | 0.867 | 0.633 |

BOUNDARY DETECTION, SEMANTIC SEGMENTATION AND OBJECT DETECTION IN A SINGLE NETWORK

Another object of the invention concerns combining boundary detection, semantic segmentation and object detection in a recurrent architecture.

Addressing vision problems with Deep Convolutional Neural Networks (DCNN) inherently relies on a form of hierarchical processing: starting by low-level image analysis into bars, corners, and blobs, DCNNs end up providing responses related to increasingly sophisticated patterns, such as object identities, or poses. Typically such architectures are trained by treating the responses of the intermediate layers as 'hidden variables', that are set during training so as to maximize the performance of a single final task. This strategy has been shown to yield excellent results for high-level tasks such as image classification, object detection, as well as low-level vision tasks.

A research direction that is recently gaining ground in using DCNNs for vision is to address multiple, complementary, tasks within a single architecture which acts like a 'swiss knife' that handles all tasks.

In this work we aim at extending this line of research in two ways, firstly by broadening the range of problems addressed by the network, and secondly by solving all tasks jointly through a recurrent, synergistic architecture.

Our contribution in this direction consists in broadening the range of problems addressed by a single architecture. Most recent works aim at solving problems that are at a common level of complexity, e.g. mid-level (surface, depth, region labels or pose and category labels. Instead, in this work we start from the low-level task of boundary detection, we pass through region proposal generation, and go all the way to semantic segmentation and object detection. For all of these tasks we observe substantial improvements in performance over the latest state-of-the-art, while at the same time keeping computation time to be less that one second per frame.

We propose to exploit the multi-resolution architecture described above, comprising multi-resolution DCNN encompassing grouping through spectral clustering, and extend it so as to perform the remaining tasks through a single network. In particular we use a common architecture for the tasks of (i) region proposal generation (ii) semantic segmentation and eventually (iii) object recognition.

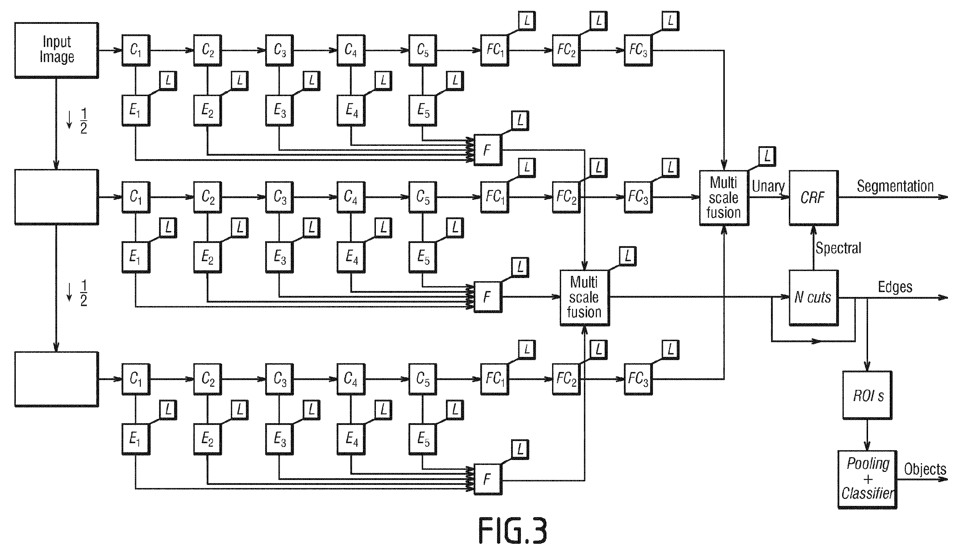

As illustrated in Fig. 3 we now have additional processing streams, for semantic segmentation, for region proposals and object mapping.

The modules 'FCi' correspond to Fully Connected layers that implement nonlinear transformations of the convolutional features, leading to non-linear classification results.

The module "multi-scale fusion" (magenta) fuses the results of the different resolutions by forming a linear combination of their outputs - the parameters of the combination are learned discriminatively.

The module CRF implements fully connected conditional random field modelling and outputs semantic segmentation results, by integrating the classifier scores with some image-based measure of affinity.

The module NCuts implements the Normalized Cut algorithm as described above to achieve edge detection of the input image.

The modules ROI and "Pooling and classifier" respectively achieve detection of regions and interest and classification to extract objets from the analysed image or scene.

The mapping from the convolutional layers, denoted $C_i$, to the final desired outputs is implemented through 'convolutionally implemented' fully-connected layers, as described in "Modeling local and global deformations in deep learning", by Papandreou et al., published in CVPR 2015, pages 390-399, shown as FCi boxes.

For these additional streams we use loss functions adapted to the task at hand, guiding the learning of the fully-connected layers so as to optimize a task-specific performance measure. We use the softmax loss function, as is common in all recent works on semantic segmentation, for example as described by Long et al, in "Fully convolutional networks for semantic segmentation",, published in the Proceedings of CVPR, 2014 conference.

Region proposals, indicated by the 'Region-of-Interest' (ROI) module are generated by processing the boundary maps delivered by our system. For this we rely on the system of Krähenbühl and Koltun, "Learning to propose objects", published in the Proceedings of CVPR, 2015 and already mentioned above.

## A RECURRENT ARCHITECTURE FOR A SYNERGISTIC TREATMENT OF LOW-,MID- AND HIGH- LEVEL VISION TASKS

Our second contribution consists in explicitly controlling and exploiting the flow of information across these different tasks so as to improve their solutions in a synergistic and recurrent manner.

Once a first estimate of the network responses to the different tasks is obtained, these are forwarded to a novel layer that at any point contains the current network estimates for all tasks (boundaries, semantic labels, objects). We denominate this layer reference layer or VisionBank layer to indicate that it stores the results of estimating multiple computer vision tasks.

This VisionBank layer is then used to update the solutions to the individual tasks: we learn a subnetwork that directly operates on the cue-bank features and aims at predicting the solutions to the different tasks addressed by the network. These solutions are then fused with the original solutions, and the whole process is repeated again.

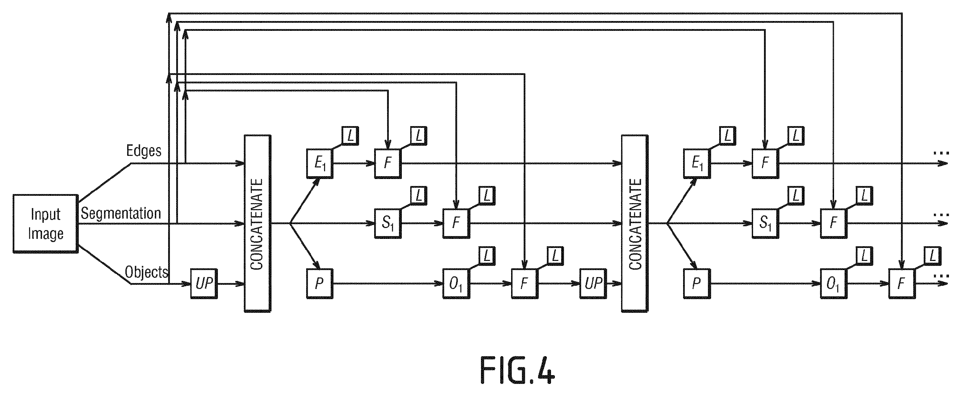

This processing pipeline is illustrated in Fig. 4. We have abstracted the inner workings of the individual tasks, and focus on the information flow across them, through the network's trellis. We notice a 'french-braid' processing pattern, where each task draws new information from the VisionBank layer, and then feeds the solution back to the trellis in the next iteration.

## VISIONBANK LAYER

For the tasks of semantic segmentation and boundary detection the formation of their VisionBank entries is straightforward: we concatenate the solutions of the individual tasks in a larger matrix.

The output of the semantic segmentation module is a *HxWxC* array, where H, W are the image height and width respectively and C is the number of visual categories (in our experiments we use the 20 categories included in the PASCAL VOC challenge). The output of the boundary detection module is an *HxWx*1 array, containing the probability that a pixel is a boundary, as estimated by the multi-scale fusion layer - their combinations gives an *HxWx*(*C* + 1) array.

Another entry in the VisionBank layer is the one that comes from objects. Objects are represented as bounding boxes (rectangles) defined over the image coordinate system - and our goal is to turn these rectangles in an array format, defined over all pixels, so that they become tantamount to the other VisionBank entries (boundaries, segmentation labels). For this we invert the 'spatial pooling' operation used in particular in the works of He et al., "Spatial pyramid pooling in deep convolutional networks for visual recognition", ECCV 2014, to turn an array of features into a rectangle-based representation.

Here we introduce 'spatial unpooling' to turn the class-scores of bounding boxes into an array of class scores.

In particular, considering that for a rectangle $B^i = \left( x_0^i, x_1^i, y_0^i, y_1^i \right)$, our object detection module associates scores $\left( C_0^i, ..., C_N^i \right)$ to the N +1 possible object classes (with 0 being the background class), we obtain the unpooling map in terms of the following expression:

$$S(x, y, c) = \max_{i \in B} I_{B^i}(x, y) + C_c^i \quad \text{(Eq. 11)}$$

$$I_{B^i}(x, y) = \begin{cases} 0 & \left(x_0^i \le x \le x_1^i\right) \text{ and } \left(y_0^i \le y \le y_1^i\right) \\ -\infty & \text{otherwise} \end{cases} \quad \text{(Eq. 12)}$$

In words, the indicator function for the i-th box $I_{B^i}(x,y)$ equals zero when $x$, $y$ is contained in $B^i$ and minus infinity otherwise. In the presence of multiple boxes that contain a pixel, the expression in (Eq. 11) will assign to each class the score delivered by the strongest supporter of that class. We note that the maximization is decoupled across classes, i.e. this may yield conflicting apparently evidence, which is however desirable when an object contains another object (e.g. a person holding a dog in his arms). The disambiguation between them is left to the fusion with semantic segmentation.

This 'unpooling' procedure provides us with a means of turning the sparse geometric information contained in the region proposals into a dense array of values $S(x,y,c)$ which constitute another entry into the VisionBank layer.

In our current implementation the VisionBank layer has (2C+1) entries, with C = 20, for semantic segmentation, unpooling, and boundary detection. It is also possible to include additional cues from normal/depth estimation or even optical flow when it comes to video processing.

RECURRENT PROCESSING

Having outlined how we populate the VisionBank layer with the results of different tasks, we now turn to exploiting it to improve the individual tasks through recurrent processing. The outputs of each task are updated based on the ensemble of previous solutions, using a update rule that is learned through discriminative training. This results in a recurrent neural network (RNN) architecture with an artificial 'temporal' parameter that corresponds to the number of iterations applied.

In an implementation, a small number of iterations is used, for example 4.

The training of recurrent neural networks (RNNs) has been introduced in the 1980's and has recently attracted increased attention in the context of recognizing and predicting temporal patterns. In computer vision Zheng et al. recently formulated in the article "Conditional random fields as recurrent networks", published in Proc. ICCV, 2015, the mean-field inference algorithm of the Dense Conditional Random Field (Dense CRF) in terms of a recursive neural network and used this formulation to jointly estimate the CRF parameters and the remaining DCNN architecture.

In this work we consider instead the fusion of multiple tasks and use recurrent processing to exploit the flow of information across them. Rather than using a fixed parametric form for the update rule, we allow for arbitrary nonlinear mappings, delivered by a multi-layer architecture. Finally, we perform a discriminative fusion of the recurrent processing results with the results from the previous stage, which guarantees an improvement of the (training) loss at every stage of processing.

In particular, we observe that the VisionBank layer is convolutional, meaning that its size changes proportionally to the image dimensions. We can thus use it as any other convolutional layer of a DCNN for the tasks considered (boundary detection, semantic segmentation, object detection).

Our recursive processing architecture is shown in Fig. 4. For this figure we have abstracted the inner workings of the individual tasks, detailed in Fig. 3, and we now focus instead on the information flow across them, through the network's trellis. We notice a 'french-braid' processing pattern, where each task draws new information from the VisionBank layer, and then feeds the solution back to the trellis in the next iteration. We also note that loss layers are attached to all intermediate results - namely we process the VisionBank layer with processing modules that aim directly at predicting the desired solution and then fuse their results with the previously computed solutions.

In order to pin down this processing, we use the following notation: we denote the task being processed by $T$, with $T \in \{B,S,O\}$ for boundaries/segmentation/object detection respectively and by $I^T$ the prediction of the network for a task at iteration 0, which is what the network in Fig. 3 provides. We also denote by $v_k$ the outputs of the VisionBank layer at the k-th iteration, by $s_k^T$ the prediction of the network at iteration k for task, by $w^T$ the parameters used to form $s_k^T$ based on $v_k$, and by $r^T$ the fusion weights for combining $I^T$ with $s_k^T$. We have set the new network parameters, $r^T$, $w^T$ to not depend on time - namely the VisionBank-to-task prediction model does not change over iterations, even though its input does. This simplifies the model, avoids overfitting and accelerates training.

In order to efficiently train this architecture, we steer each intermediate result towards providing the desired output - as we did for the boundary detection task in our concurrent work. For this we introduce a loss function that penalizes both the 'raw' VisionBank-to-task prediction, as well as its fusion with the original prediction.

Considering a single task $T$, for which we use $K$ recursion steps, we have the following training objective:

$$L_T = L(W^T, r^T) = \sum_{k=1}^{K} L_{Direct}(P(w^k T, v_k)) + L_{fuse}(F(r^T, s_k^T, I^T)) \quad \text{(Eq 13)}$$

where in the first term $s_k^T = P(w^k T, v_k)$ is the VisionBank-based prediction for the T -th layer, implemented as a two-layer DCNN, and $F(r^T, s_k^T, I^T) = r_1^T s_k^T + r_0^T I^T$ fuses the zero-th iteration results, $I^T$ with those of the current prediction $s_k^T$ in terms of a simple linear combination.

We have observed that a Graduated DSN training scheme, similar to the one used for boundary training yields improved results. We implement this by using a training criterion of the following form:

$$L_T^t = \sum_{k=1}^{K} (1 - t/T)^{K-k} \left[ L_{Direct}(P(w^k T, v_k)) + L_{fuse}(F(r^T, s_k^T, I^T)) \right] \quad \text{(Eq 14)}$$

where now t is the training iteration, T is the total training time, and the effect of the $(1\text{-}t/T)^{K\text{-}k}$ factor is to gradually place all of the focus on the final layer's output (where k = K) and let layers for which k < K gradually disappear from the training objective. As in the case of boundaries, this helps set the network on the right path originally (for small values of $t/T$ all processing steps are penalized), and eventually let the final step take over the training of the network.

We obtained better results through this procedure.

It is to be understood that embodiments of the present invention can be implemented in various forms of programmable hardware, software, firmware, special purpose processes, or a combination thereof.

In one embodiment, the present invention can be implemented in software as an application program tangible embodied on a computer readable program storage device. The application program can be uploaded to, and executed by, a machine comprising any suitable architecture.

In another embodiment, the present invention can be implemented in a hardware associated with a processing unit (scanner, ultrasound acquisition device, graphics processing units, FPGAs, etc.)

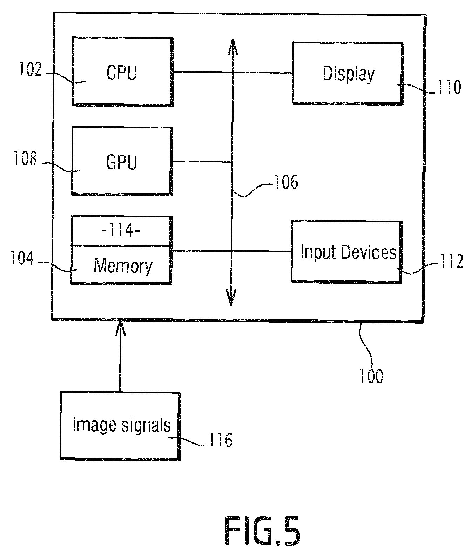

Figure 5 is a block diagram of an exemplary processing system for implementing a method for boundary detection, for image segmentation and/or for object extraction according to an embodiment of the invention.

Referring now to figure 5, a processing system 100 for implementing the present invention comprises, a central processing unit (CPU) 102, a memory 104, an input/output (I/O) interface 106 and a graphics processing unit 108. The processing system 100 is generally coupled through the I/O interface 106 to a display 110 and various input devices 112 such as a mouse, keyboard touch-pad screen and devices (running on different operating systems IOS, Android), gesture interpretation devices (kinect, range data).

The support circuits can include circuits such as cache, power supplies, clock circuits, and a communication bus. The memory 104 can include random access memory (RAM), read only memory (ROM), remote access hardware drive (conventional hard drive or cloud storage) accessible through direct connection, wired wireless ethernet or a combination thereof. The present invention can be implemented as a routine 114 that is stored in memory 104 and executed by the CPU 102 or by GPU 108 to process the signal from the source image 116. As such, the computer system 100 is a general purpose computer system that becomes a specific purpose processing system when executing the routine 114 of the present invention.

The processing system 100 also includes an operating system and micro instruction code. The various processes and functions described herein can either be part of the micro instruction code or part of the application program (or combination thereof) which is executed via the operating system. In addition, various other peripheral devices can be connected to the computer platform such as an additional data storage device and a printing device.

In a variant, a routine 114 that is stored in memory 104 and executed by the CPU 102 or by GPU 108 to process the signal from the source image 116 is part of a medical processing programmed device, for example an echography device.

It is to be further understood that, because some of the constituent system components and method steps depicted in the accompanying figures can be implemented in software, the actual connections between the systems components (or the process steps) may differ depending upon the manner in which the present invention is programmed.

Given the teachings of the present invention provided herein, one of ordinary skill in the related art will be able to contemplate these and similar implementations or configurations of the present invention.

While the present invention has been described in detail with reference to a preferred embodiment, those skilled in the art will appreciate that various modifications and substitutions can be made thereto without departing from the spirit and scope of the invention as set forth in the appended claims.

**Claims**

1. Method for processing a digital image to achieve boundary detection using an architecture based on deep convolutional neural networks, wherein said architecture is multi-resolution and trained over a training dataset with associated predetermined boundary annotations, wherein said annotations are provided by human operators, and wherein the architecture is trained with a training objective encoding an uncertainty of the human boundary annotations using a multiple instance framework.

2. A method according to claim 1, wherein said multi-resolution deep convolutional neural network architecture uses a temporally-adaptive loss function for training.

3. A method according to claims 1 or 2, wherein the uncertainty is incorporated as a loss for the training of the deep convolutional neural networks architecture for boundary detection.

4. A method according to any of claims 1 to 3, wherein the multi-resolution deep convolutional neural networks architecture comprises intermediate hierarchical layers, wherein a subset of processed layers are coordinated and wherein the top layer coordinates all layers at the end of the processing.

5. A method according to any of claims 1 to 4, wherein the multi-resolution deep convolutional neural networks architecture uses weights at different scales, and wherein the weights at different scales are tied.

6. A method according to claim 5, wherein the method comprises estimating multi-scale boundary probabilities and fusing of the multi-scale boundary probabilities at the end of the processing.

7. A method according to any of claims 1 to 6, wherein the method further comprises spectral clustering.

8. A method according to any of claims 1 to 7, wherein the method further comprises proposing one or several regions in said input image that contain(s) an object belonging to a predetermined class of objects.

9. Method for processing a digital image, the method being adapted to jointly achieve several tasks including boundary detection, region generation, class-specific image labeling and object detection, each task proving an associated result upon completion, wherein the method uses an architecture based on deep convolutional neural networks, said architecture being multi-resolution and trained over a training dataset with associated predetermined annotations comprising boundary, pixel-level class labels and object region annotations, wherein said annotations are provided by human operators, and wherein the architecture is trained with a training objective encoding a joint treatment of all tasks.

10. A method according to claim 9, wherein the object detection task outputs object detection results according to a geometric representation, and wherein said object detection results are transformed from the geometric representation into a matrix of values.

11. A method according to claims 9 and 10, wherein the method further comprises combining the results of different tasks into a uniform representation.

12. A method according to any of claims 9 to 1, comprising recurrently updating the solutions to the tasks of boundary detection, class-specific image labelling and object detection, wherein the results to the tasks at the previous iterations are used to update the results at the current iteration, and wherein the update, for each task, is trained with a training objective ensuring that the result for said task is either improved or left unchanged at the current iteration.

13. Device for processing a digital image to achieve boundary detection using an architecture based on deep convolutional neural networks, comprising at least one graphics processing unit adapted to implement a processing method according to claims 1 to 8.

14. Device for processing a digital image to achieve boundary detection, region generation, semantic segmentation and object detection using an architecture based on deep convolutional neural networks, comprising at least one graphics processing unit adapted to implement a processing method according to claims 9 to 12.

FIG.1

FIG.2

FIG.3

EP 3 171 297 A1

FIG.4

FIG.5

Europäisches
Patentamt

European
Patent Office

Office européen
des brevets

## EUROPEAN SEARCH REPORT

Application Number

EP 15 30 6836

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAPANDREOU GEORGE ET AL: "Modeling local and global deformations in Deep Learning: Epitomic convolution, Multiple Instance Learning, and sliding window detection", 2015 IEEE CONFERENCE ON COMPUTER VISION AND PATTERN RECOGNITION (CVPR), IEEE, 7 June 2015 (2015-06-07), pages 390-399, XP032793468, DOI: 10.1109/CVPR.2015.7298636 [retrieved on 2015-10-14] * the whole document * | 1-14 | INV. G06K9/46 G06K9/48 G06K9/62 |
| A | ARBELA EZ P ET AL: "Contour Detection and Hierarchical Image Segmentation", IEEE TRANSACTIONS ON PATTERN ANALYSIS AND MACHINE INTELLIGENCE, IEEE COMPUTER SOCIETY, USA, vol. 33, no. 5, 1 May 2011 (2011-05-01), pages 898-916, XP011409070, ISSN: 0162-8828, DOI: 10.1109/TPAMI.2010.161 * the whole document * | 7,10 | |
| A | WO 2008/133951 A2 (MASSACHUSETTS INST TECHNOLOGY [US]; SEUNG H SEBASTIAN [US]; MURRAY JOS) 6 November 2008 (2008-11-06) * figure 1 * * figure 2 * * figure 3 * | 1-14 | TECHNICAL FIELDS SEARCHED (IPC) G06K |

-/--

The present search report has been drawn up for all claims

| Place of search | Date of completion of the search | Examiner |
|---|---|---|
| The Hague | 3 May 2016 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 6836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOJIC ET AL: "Epitomic analysis of appearance and shape", PROCEEDINGS OF THE EIGHT IEEE INTERNATIONAL CONFERENCE ON COMPUTER VISION. (ICCV). NICE, FRANCE, OCT. 13 - 16, 2003., 1 January 2003 (2003-01-01), pages 34-41 vol.1, XP055269666, US DOI: 10.1109/ICCV.2003.1238311 ISBN: 978-0-7695-1950-0 * the whole document * | 1-14 | |
| A | KOKKINOS I ET AL: "Computational analysis and learning for a biologically motivated model of boundary detection", NEUROCOMPUTING, ELSEVIER SCIENCE PUBLISHERS, AMSTERDAM, NL, vol. 71, no. 10-12, 1 June 2008 (2008-06-01), pages 1798-1812, XP022703776, ISSN: 0925-2312, DOI: 10.1016/J.NEUCOM.2007.11.031 [retrieved on 2008-03-12] * the whole document * | 1-14 | |
| A | IASONAS KOKKINOS ED - KOSTAS DANIILIDIS ET AL: "Boundary Detection Using F-Measure-, Filter and Feature- (F3) Boost", 5 September 2010 (2010-09-05), COMPUTER VISION - ECCV 2010, SPRINGER BERLIN HEIDELBERG, BERLIN, HEIDELBERG, PAGE(S) 650 - 663, XP019150600, ISBN: 978-3-642-15551-2 * the whole document * | 1-14 | |

TECHNICAL FIELDS
SEARCHED (IPC)

-/--

The present search report has been drawn up for all claims

| Place of search | Date of completion of the search | Examiner |
|---|---|---|
| The Hague | 3 May 2016 | Martinière, Anthony |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 30 6836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Piotr Dolí ET AL: "Fast Edge Detection Using Structured Forests", , 25 November 2014 (2014-11-25), XP055269491, Retrieved from the Internet: URL:http://arxiv.org/pdf/1406.5549.pdf [retrieved on 2016-04-28] * the whole document * ----- | 1-14 | |

TECHNICAL FIELDS SEARCHED (IPC)

The present search report has been drawn up for all claims

| Place of search | Date of completion of the search | Examiner |
|---|---|---|
| The Hague | 3 May 2016 | Martinière, Anthony |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 171 297 A1**

## ANNEX TO THE EUROPEAN SEARCH REPORT
## ON EUROPEAN PATENT APPLICATION NO.

EP 15 30 6836

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2016

| Patent document cited in search report | Publication date | Patent family member(s) | Publication date |
|---|---|---|---|
| WO 2008133951 A2 | 06-11-2008 | US 2010183217 A1<br>WO 2008133951 A2 | 22-07-2010<br>06-11-2008 |

EPO FORM P0459

For more details about this annex : see Official Journal of the European Patent Office, No. 12/82

EP 3 171 297 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Gradient-based learning applied to document recognition. *Proceedings of the IEEE,* 1998
- **KRIZHEVSKY et al.** Imagenet classification with deep convolutional neural networks. *NIPS,* 2013
- **ARBELAEZ et al.** Contour detection and hierarchical image segmentation. *PAMI,* 2011
- **EVERINGHAM.** *The PASCAL Visual Object Classes Challenge - a Retrospective*
- **XIE ; TU.** Holistically-nested edge detection. Proceedings of ICCV, 2015
- **LEE et al.** Deeply-supervised nets. AISTATS, 2015
- **K. SIMONYAN ; A. ZISSERMAN.** Very Deep Convolutonal Networks for Large-Scale Image Recognition. *Proceedings of the International Conference on Learning Representations (ICLR),* 2015
- **SIRONI et al.** Multiscale centerline detection. *PAMI,* 2015
- **DIETTERICH et al.** Solving the multiple-instance problem with axis-parallel rectangles. *Artificial Intelligence,* 1997, vol. 89, 31-71
- **SHI ; MALIK.** Normalized cuts and image segmentation. *the proceedings of CVPR,* 1997
- **CATANZARO et al.** Efficient, high-quality image contour detection. *Proceedings ICCV,* 2009
- **UIJLINGS et al.** Selective Search for Object Recognition. *IJCV,* 2013
- **GIRSHICK et al.** Rich feature hierarchies for accurate object detection and semantic segmentation. *Proceedings of CVPR,* 2014
- Learning to Propose Objects' (LPO) system of Krähenbühl and Koltun. *Proceedings of CVPR,* 2015
- **DOLLAR ; ZITNICK.** Fast edge detection using structured forests. *PAMI,* 2015, vol. 37-8, 1558-1570
- **PAPANDREOU et al.** Modeling local and global deformations in deep learning. *CVPR,* 2015, 390-399
- **LONG et al.** Fully convolutional networks for semantic segmentation. *Proceedings of CVPR,* 2014
- **KRÄHENBÜHL ; KOLTUN.** Learning to propose objects. *Proceedings of CVPR,* 2015
- **HE et al.** Spatial pyramid pooling in deep convolutional networks for visual recognition. *ECCV,* 2014
- Conditional random fields as recurrent networks. *Proc. ICCV,* 2015